# EUROPÄISCHE PATENTSCHRIFT

(11) **EP 3 763 202 B1**
(45) Veröffentlichungstag und Bekanntmachung des Hinweises auf die Patenterteilung: **27.12.2023**
(21) Anmeldenummer: 19185589.9
(22) Anmeldetag: 10.07.2019
(51) Int. Cl.: A01G 24/25, A01G 24/28, A01G 24/44

(54) **KULTURSUBSTRAT FÜR PFLANZEN**
CULTURE SUBSTRATE FOR PLANTS
SUBSTRAT DE CULTURE POUR PLANTES

(43) Veröffentlichungstag der Anmeldung: 13.01.2021
(73) Patentinhaber: Floragard Beteiligungs-GmbH, 26135 Oldenburg (DE)
(72) Erfinder: Förster, Thomas, 26135 Oldenburg (DE)
(74) Vertreter: Ellberg, Nils

(56) Entgegenhaltungen:
- EP-A1- 2 944 185
- WO-A1-2019/018881
- US-A1- 2017 172 082
- US-A1- 2019 000 029

## Beschreibung

Die Erfindung betrifft Kultursubstrate für Pflanzen der im Oberbegriff des Anspruchs 1 genannten Art sowie daraus hergestellte Presstöpfe und Verfahren zur Herstellung derselben und zur Kultivierung einer Pflanze.

In der WO 2019/018881 A1 wird ein Wachstumsmedium, beispielsweise aus Kokosfaser, mit Samen und einem Klebstoff versehen. Der Klebstoff kann beispielsweise "psyllium" (Flohsamen) sein. Das Wachstumsmedium kann auch ein Torf-Pellet enthalten.

Im Erwerbsgartenbau - zum Beispiel dem Zierpflanzenbau, Obst- und Gemüsebau, Staudenbau und in Baumschulen - findet die Pflanzenproduktion überwiegend losgelöst vom gewachsenen Naturboden in Kulturgefäßen wie z. B. Aussaatkisten, Anzucht- oder Jungpflanzenplatten, Töpfen oder Containern statt. Daher gibt es einen großen Bedarf an industriell hergestellten Kultursubstraten, die dem Gärtner reproduzierbare Eigenschaften garantieren. Auch im Hobbygartenbau spielen Kultursubstrate als sogenannte Blumenerden oder Pflanzerden eine große Rolle für die Pflanzenanzucht und Weiterkultur der Pflanzen in Töpfen, Kübeln, Balkonkästen oder im Gartenbeet.

Kultursubstrate stellen den Pflanzen über die sogenannten Substratausgangsstoffe definitionsgemäß durchwurzelbaren Raum zur Verfügung und versorgen die Pflanze mit allen für die Lebensvorgänge wichtigen Makro- und Mikronährstoffen. In den letzten Jahrzehnten wurde aufgrund seiner einzigarten chemischen, physikalischen und biologischen Eigenschaften überwiegend Hochmoortorf (Weißtorf und Schwarztorf) als Ausgangsstoff für Kultursubstrate verwendet. Schwarztorf ist der stärker zersetzte, ältere Hochmoortorf; Weißtorf der schwächer zersetzte, jüngere Hochmoortorf. Beide Torfarten werden je nach Anwendungsbereich entweder getrennt voneinander oder in Mischungen in unterschiedlichen Anteilen für die Herstellung von Kultursubstraten verwendet. Zur Optimierung der chemischen, physikalischen und/oder biologischen Eigenschaften oder für bestimmte Anwendungsbereiche können neben Hochmoortorf weitere organische oder mineralische Substratausgangsstoffe eingesetzt werden, z. B. Ton zur Verbesserung der Nährstoffspeicherung, Perlite, Holzfaserstoffe zur Erhöhung der Luftkapazität oder Kompost zur Verbesserung der mikrobiellen Aktivität.

Aufgrund der endlichen Hochmoortorfressourcen in Deutschland wird immer mehr Torf aus Ländern mit größeren Torfvorräten wie z. B. den baltischen Staaten, Skandinavien oder Russland importiert und in Kultursubstraten verwendet. Darüber hinaus werden aber den Kultursubstraten für Erwerbs- und Hobbygartenbau auch aus Umwelt- und Klimaschutzgründen immer mehr alternative organische oder mineralische Substratausgangsstoffe als sogenannte Torfersatzstoffe beigemischt, um Hochmoortorf zu ersetzen. Auch Umweltverbände, politische Vorgaben, kritische Endverbraucher oder Vorgaben des ökologischen Pflanzenbaus in Bezug auf Torfersatz tragen dazu bei, dass der Anteil an alternativen Ausgangsstoffen in Kultursubstraten stetig zunimmt.

Derzeit verwendete alternative Substratausgangsstoffe sind z. B. Grünschnittkompost, Rindenhumus, Holzfaserstoffe, Kokosmaterialien (Kokosmark, Kokosfasern, Kokoschips), Xylit (Braunkohlefaserholz), Flachsschäben, Reisspelzen, Perlite, Vermiculite, Blähton, Lava, Bims und andere organische oder mineralische Stoffe.

Vereinzelt gibt es auch den Wunsch oder die Forderung nach einer Pflanzenproduktion in stark torfreduzierten oder sogar gänzlich torffreien Kultursubstraten bzw. nach vollständigem Ersatz von Hochmoortorf für Kultursubstrate für den Hobbygartenbau. Für den Erwerbsgartenbau bedeutet dies eine stetige Anpassung der Produktionsweise an die sich durch die Torfersatzstoffe ändernden Eigenschaften der Kultursubstrate. Auch wird das Kulturrisiko durch die oft ungünstigeren Eigenschaften der alternativen Ausgangsstoffe und ihre Inhomogenität in Bezug auf Nährstoff- und Salzgehalte erhöht.

Problematisch ist insbesondere die abnehmende Verfügbarkeit des Schwarztorfs, der insbesondere bei der Produktion von Kultursubstraten (Presstopfsubstraten) für die Herstellung von Presstöpfen für die Jungpflanzenanzucht im Gemüsebau eine entscheidende Rolle spielt. Der in einem speziellen Herstellungsverfahren gewonnene durchfrorene Schwarztorf, sorgt im Presstopfsubstrat durch seine guten Klebeeigenschaften für eine gute Bindigkeit und ermöglicht die einfache Herstellung von formstabilen Presstöpfen, die problemlos die Kulturphase und die automatische Pflanzung mit Pflanzmaschinen überstehen. Ein Ersatz des Schwarztorfs im Presstopfsubstrat durch den vergleichsweise wenig bindigen Weißtorf oder alternative Substratausgangsstoffe, hat jedoch einen starken Verlust der Bindigkeit des Substrats zur Folge, sodass aus diesen Substratmischungen mit den handelsüblichen Presstopfmaschinen keine formstabilen Presstöpfe hergestellt werden können. Die Presstöpfe fallen spätestens zum Termin der Weiterverarbeitung auseinander. Eine standardisierte Weiterkultur oder gar automatisierte Verpflanzung der Jungpflanzen in das Freiland, bei dem es auf den physischen Zusammenhalt bzw. die Stabilität des Presstopfes ankommt, wird dadurch unmöglich. Der Vorteil bei der Verwendung eines Presstopfes zur Jungpflanzenanzucht liegt darin, dass kein Kulturgefäß in Form von Topf, Tray oder Multipack verwendet werden muss. Bei der Herstellung eines Presstopfes wird das Kultursubstrat durch hohen Pressdruck mittels spezieller Presstopfmaschinen in eine Würfelform gepresst. Somit kann später jede Pflanze als eine Einheit weiterverarbeitet werden. Dabei sind in der Praxis unterschiedliche Presstopfgrößen und -maschinentypen gebräuchlich. Von entscheidender Bedeutung für die Funktionalität ist dabei die Bindigkeit des Kultursubstrates. Zukünftig wird der Bedarf an Presstopfsubstraten mit geringerem Schwarztorfanteil bzw. einem höheren Anteil an alternativen Substratausgangsstoffen steigen, aus welchen sich Presstöpfe mit ausreichender Bindigkeit herstellen lassen können.

In der Vergangenheit wurden daher verschiedene Versuche unternommen, mit deren Hilfe die Festigkeit solcher Presstöpfe erhöht werden sollte. So werden beispielsweise in EP 0 971 015 A1, EP 1 330 949 A1 und WO 00/60922 A1 Verfahren zur Herstellung von festen Kultursubstraten beschrieben, in denen Isocyanat-Prepolymere zur Verfestigung verwendet werden. US 2006/0248795 A1 beschreibt den Zusatz eines biologisch abbaubaren Bindemittels zu demselben Zweck. Das Patent EP 3 154 334 B1 umfasst ein Verfahren zur Nutzbarmachung von feinteiligem Torf, insbesondere zur Verbesserung der Festigkeit von Pflanzsubstraten mittels eines Dispersionsklebstoffs auf Basis eines organischen Klebstoffpolymers. Alle diese Zusatzstoffe haben jedoch den Nachteil, dass sie als synthetisch hergestellte Chemikalien nur im konventionellen Anbau eingesetzt werden können und ökologischen Anbaukriterien für den Bioanbau nicht genügen. Darüber hinaus ist es problematisch, dass Dispersionsklebstoffe (Leime) wässrige Klebstoffsysteme sind, die physikalisch durch Verdunstung des Wassers abbinden. Dadurch sind diese Substrate für die Herstellung von Presstöpfen ungeeignet, weil nach der Aussaat der Samen in den Presstopf für die Keimung eine kontinuierlich hohe Feuchtigkeit in dem gepressten Topf benötigt wird. Auch die Herstellung der Klebstoffenthaltenen Substrate ist aufwändig, da die bekannten Klebstoffe flüssig appliziert werden müssen und aus diesem Grund einer gewissen Vorbereitung bedürfen. Feste Zusätze können in den substratproduzierenden Werken mit der vorhandenen Dosiertechnik problemlos und ohne weitere Vorbereitung verarbeitet werden. Bei flüssigen Zusätzen müssen vom Werk zunächst Gebrauchslösungen hergestellt werden, indem diese mit Wasser als Lösungs- oder Dispersionsmittel vermengt werden. Darüber hinaus ist es nachteilig, dass die Klebstoffe nach dem Einmischen eine nicht unerhebliche Zeit zum Abbinden (Verdunsten des Wassers) benötigen. Das ist zumindest bei der Herstellung von Presstöpfen schlecht mit der Produktionspraxis vereinbar. Vorzugsweise sollte die Wirkung eines Zusatzes zur Verfestigung der Presstöpfe schon während der Verarbeitung in der Presstopfmaschine einsetzen, um das Kultursubstrat unmittelbar maschinengängig und bindig zu machen.

Auch bei der Jungpflanzenanzucht in Anzucht- oder Jungpflanzenpaletten (Trays) ist eine erhöhte Bindigkeit des Kultursubstrats von Vorteil, da es bei der manuellen oder maschinellen Entnahme der Jungpflanzenpresstöpfe aus der Anzuchtplatte mittels sogenannter Pikierroboter auf eine gute Haltbarkeit des Wurzelballens ankommt.

Es besteht daher ein Bedarf an torfhaltigen Substraten mit höherem Weißtorfanteil und an torffreien oder torfreduzierten Kultursubstraten für Pflanzen, mit denen sich hinreichend feste Presstöpfe herstellen lassen.

### Beschreibung der Erfindung

Gelöst wird diese Aufgabe durch ein Kultursubstrat mit den Merkmalen von Anspruch 1 und einen Presstopf oder Jungpflanzenplug mit den Merkmalen von Anspruch 10.

In einem ersten Aspekt betrifft die Erfindung ein Kultursubstrat für Pflanzen, wobei das Kultursubstrat (a) Flohsamenschalen und/oder Flohsamenschalenfragmente, und (b) Torf und/oder Torfersatzstoff umfasst.

Es hat sich gezeigt, dass Flohsamenschalen und Flohsamenschalenfragmente dem Kultursubstrat überraschenderweise eine ausgezeichnete Bindungsfähigkeit verleihen. Dies bedeutet einerseits, dass sich mittels des erfindungsgemäßen Kultursubstrats mechanisch sehr stabile und langlebige Presstöpfe herstellen lassen, die aber gleichzeitig ausreichend Wurzelraum für eine Durchwurzelung durch die Jungpflanzen bieten. Darüber hinaus weist das erfindungsgemäße Kultursubstrat auch eine außerordentlich gute Wasserspeicherfähigkeit und sehr gute Wiederbenetzbarkeit nach dem Austrocknen auf. Gerade die verbesserte Wasserspeicherfähigkeit ist bei Einsatz von Torfersatzstoffen ein wünschenswerter Nebeneffekt, da mit mengenmäßiger Zunahme des Torfersatzes bestimmte physikalische Eigenschaften des Torfes, wie z. B. sein Wasserspeichervermögen, in dem Kultursubstrat ebenfalls minimiert werden.

Nach deutschem Düngegesetz (2009) und im Sinne dieser Erfindung sind "Kultursubstrate" Zusammensetzungen, die dazu bestimmt und geeignet sind, Pflanzen - insbesondere Nutzpflanzen - als Wurzelraum zu dienen. Zu diesem Zweck können die Kultursubstrate in Böden eingebracht, auf Böden aufgebracht oder in bodenunabhängigen Anwendungen genutzt werden. Das Kultursubstrat ist somit als alleiniger Wurzelraum und Nährstoffspender für Pflanzen geeignet. Das Inverkehrbringen von Kultursubstraten regelt die deutsche Düngemittelverordnung (2012). Kultursubstrate finden Verwendung im Erwerbsgartenbau (Zierpflanzenbau, Staudenbau, Gemüsebau, Obstbau, Baumschulen und Garten- und Landschaftsbau). Blumenerden und Pflanzerden, welche auch unter die Kultursubstrate fallen, kommen im Hobbygartenbau beim Privatanwender zur Anwendung.

Kultursubstrate werden von den Betrieben im Produktionsgartenbau zur Pflanzenproduktion verwendet. Sie dienen den Pflanzen als Wurzelraum und müssen die speziellen Bedürfnisse der jeweiligen Pflanzenarten und des vorgesehenen Anwendungsbereichs erfüllen. Dabei wird zwischen Jungpflanzen- bzw. Anzuchtsubstraten sowie Substraten für die Weiterkultur - also Topf- bzw. Containersubstraten - unterschieden. Das erfindungsgemäße Kultursubstrat ist bevorzugt ein Jungpflanzen- und/oder Anzuchtsubstrat. Es versteht sich, dass das Kultursubstrat auch für andere Anwendungsbereiche eingesetzt werden kann. Unabhängig von der vorgesehenen Anwendung, weist das erfindungsgemäße Kultursubstrat die folgenden Fähigkeiten auf, mittels derer eine gesunde Wurzel- und Pflanzenentwicklung unterstützt wird:
- der Pflanze und den Wurzeln ausreichend Halt geben, wobei "ausreichend" in diesem Zusammenhang bedeutet, dass die Pflanzen bei normaler Handhabung über ihr Wurzelwerk mit dem Substrat verbunden bleiben;
- Wasser speichern und bedarfsgerecht den Pflanzen zur Verfügung stellen;
- die Speicherung und das zu Verfügung stellen von Haupt- und Spurennährstoffen;
- ein chemisches Puffervermögen um pH- und Nährstoffschwankungen zu minimieren; und
- einen ausgeglichenen Luft- und Wasserhaushalt und eine ausreichende Drainagefähigkeit

Es hat sich gezeigt, dass Flohsamenschalen oder Flohsamenschalenfragmente dem Kultursubstrat eine ausgezeichnete Bindungsfähigkeit verleihen. Dies bedeutet einerseits, dass sich mittels der erfindungsgemäßen Kultursubstrate bei Anwendung als Presstopfsubstrat mechanisch sehr formstabile und langlebige Presstöpfe oder bei Anwendung als Traysubstrat gut haltbare Jungpflanzenplugs herstellen lassen. Andererseits ist der Einfluss des Zusatzes auf die anderen physikalischen, chemischen und biologischen Eigenschaften des Substrates so gering, dass das Pflanzenwachstum nicht beeinträchtigt wird und die Pflanzen vom Gartenbaubetrieb mit unverändertem Kulturverfahren angezogen werden können. Auch wirkt sich der Zusatz nicht negativ auf die Substratherstellung aus. Das erfindungsgemäße Kultursubstrat ist daher weder für den Gartenbaubetrieb, noch für den Substrathersteller mit einem erhöhten Aufwand verbunden.

Neben der Verbesserung der Bindigkeit des Kultursubstrats bewirkt der Zusatz der Flohsamenschalen bzw. Flohsamenschalenfragmente auch eine Verbesserung der Wasserspeicherfähigkeit und der Wiederbenetzbarkeit des Substrats nach dem Austrocknen. Gerade die verbesserte Wasserspeicherfähigkeit ist bei Kultursubstraten mit höherem Anteil an alternativen Substratausgangsstoffen ein wünschenswerter Nebeneffekt, da mit zunehmendem Anteil dieser Stoffe das Wasserspeichervermögen der Kultursubstrate, wie oben bereits angedeutet, in der Regel abnimmt.

Die erfindungsgemäße Anwendung von Flohsamenschalen oder deren Fragmenten in Kultursubstraten hat die Wirkung eines Bindemittels mittels dem ein Netzwerk in dem Substrat gebildet wird, das dem Substrat nach der Pressung zu Presstöpfen oder nach der Verdichtung in Jungpflanzen- oder Anzuchtpaletten eine deutlich bessere Bindigkeit/Haltbarkeit bzw. Formstabilität verleiht. Darüber hinaus haben Flohsamenschalen bzw. Flohsamenschalenfragmente die Fähigkeit aufgrund Ihrer Hygroskopizität die Wiederbenetzbarkeit und Wasserspeicherfähigkeit des Kultursubstrates zu verbessern.

Flohsamenschalen sind die Samenschalen der Wegericharten, das heißt Samenschalen der Gattung *Plantago* der Familie der *Plantaginaceaen.* Besonders bevorzugt ist die Wegerichart ausgewählt aus der Gruppe bestehend aus *Plantago ovata, Plantago indica, Plantago afra* (syn. *Plantago psyllium* auct) und Mischungen derselben. Die reife Frucht dieser Wegericharten umfasst zwei kleine Deckelkapseln (Schalen), die je zwei kleine, elliptische Samen umfassen.

Flohsamenschalen sind kommerziell als therapeutisches oder diätetisches Mittel erhältlich. Den Schalen wird beispielsweise eine Wirkung bei Verdauungsstörungen zugesprochen.

Das erfindungsgemäße Kultursubstrat umfasst Flohsamenschalen und/oder Fragmente der Flohsamenschalen, wobei Flohsamenschalenfragmente bevorzugt sind. Die Fragmente können beispielsweise durch Mahlen oder Mörsern von Flohsamenschalen erzeugt werden. In einer bevorzugten Ausführungsform im Sinne der Erfindung, liegen die Flohsamenschalenfragmente in Form eines Flohsamenschalenpulvers vor, d.h. als Pulver. Solche Flohsamenschalenpulver sind kommerziell erhältlich. Geeignete Flohsamenschalenpulver sind beispielsweise Flohsamenschalen Pulver mit 95% oder 99% Reinheit 60 mesh. Solche und weitere geeignete Flohsamenschalenpulver sind im Fachhandel erhältlich. Die Partikelgröße der Flohsamenschalenfragmente kann variieren. Generell ist jedoch eine kleinere Partikelgröße zu bevorzugen, da die Bindefähigkeit der Fragmente mit abnehmender Größe zunimmt.

Das erfindungsgemäße Kultursubstrat kann z. B. 0,5 kg/m³ oder mehr Flohsamenschalen und/oder Flohsamenschalenfragmente umfassen, z. B. 1 kg/m³ oder mehr, 1,5 kg/m³ oder mehr, 2 kg/m³ oder mehr, 2,5 kg/m³ oder mehr, 3 kg/m³ oder mehr, 3,5 kg/m³ oder mehr, 4 kg/m³ oder mehr, oder 4,5 kg/m³ oder mehr, wobei eine Menge von 3,5 kg/m³ oder mehr bevorzugt ist. In einer Ausführungsform umfasst das Kultursubstrat 2 kg/m³ oder mehr Flohsamenschalen und/oder Flohsamenschalenfragmente. Anders gesagt kann das Kultursubstrat beispielsweise von 2 bis 10 kg/m³, von 3 bis 10 kg/m³ oder von 4 bis 10 kg/m³ Flohsamenschalen und/oder Flohsamenschalenfragmente umfassen. Eine Menge von etwa 5 kg/m³ Flohsamenschalen und/oder Flohsamenschalenfragmenten ist dabei besonders bevorzugt. In bevorzugten Ausführungsformen werden die obigen Mengenangaben allein durch Flohsamenschalenfragmente erreicht. Flohsamenschalen, d.h. im Wesentlichen unfragmentierte Schalen, können in diesen Ausführungsformen zwar zusätzlich enthalten sein, sind aber nicht zwingend erforderlich. In bestimmten Ausführungsformen umfasst das Kultursubstrat Flohsamenschalenfragmente, aber im Wesentlichen keine unfragmentierten Flohsamenschalen.

Das Kultursubstrat kann ferner Torf umfassen, wobei der Torf beispielsweise Weißtorf, Schwarztorf oder eine Mischung derselben sein kann. Vorteilhafterweise ermöglicht die Erfindung eine Reduzierung des Anteils an Schwarztorf, da die verwendeten Flohsamenschalenfragmente in der Lage sind, auch Kultursubstrate mit einem hohen Weißtorfanteil (z.B. 50 Vol-.% Weißtorf) oder einem hohen Anteil an Torfersatzstoffen hinreichend zu stabilisieren. Das erfindungsgemäße Kultursubstrat kann daher Weißtorf umfassen, wobei der Weißtorf insbesondere eine Menge von 10 Vol.-% oder mehr, 15 Vol.-% oder mehr, 20 Vol.-% oder mehr, 25 Vol.-% oder mehr, 30 Vol.-% oder mehr, 35 Vol.-% oder mehr, 40 Vol.-% oder mehr, 45 Vol.-% oder mehr, oder sogar 50 Vol.-% oder mehr des Kultursubstrats ausmacht. Bevorzugt enthält das Kultursubstrat 15 Vol.-% oder mehr, stärker bevorzugt 25 Vol.-% oder mehr, noch stärker bevorzugt 30 Vol.-% oder mehr Weißtorf. In beispielhaften Ausführungsformen kann das Kultursubstrat von 15 bis 95 Vol.-%, bevorzugt von 25 bis 95 Vol.-%, stärker bevorzugt von 35 bis 95 Vol.-% Weißtorf umfassen.

Es ist erfindungsgemäß auch nicht ausgeschlossen, dass das Kultursubstrat Schwarztorf enthalten kann. Der Anteil an Schwarztorf kann jedoch gegenüber den derzeit üblichen Mengen von 50 Vol.-% oder mehr deutlich reduziert werden. Somit umfasst das Kultursubstrat vorzugsweise 50 Vol.-% oder weniger, stärker bevorzugt 35 Vol.-% oder weniger, noch stärker bevorzugt 15 Vol.-% oder weniger Schwarztorf.

Das Kultursubstrat kann somit beispielsweise etwa 10 Vol.-% bis 50 Vol.-% Schwarztorf und 10 Vol.-% bis 50 Vol.-% Weißtorf umfassen, bevorzugt 40 Vol.-% oder weniger Schwarztorf und 15% oder mehr Weißtorf.

Der erfindungsgemäß reduziert verwendete Torf (Weiß- und Schwarztorf) ist vorzugsweise Hochmoortorf. Hochmoortorf unterscheidet sich von Niedermoortorf und Übergangstorf in seiner Zusammensetzung, da andere Pflanzen, vorrangig Torf- und Braunmoose, an seiner Entstehung beteiligt sind.

Um den Torfanteil, insbesondere den Schwarztorfanteil zu reduzieren, kann das Kultursubstrat einen oder mehrere Torfersatzstoffe (Substratausgangsstoffe, die nicht Torf sind) enthalten. Geeignete Torfersatzstoffe sind Fachleuten bekannt. Die Torfersatzstoffe sind in der Regel Volumenbildner, d.h. Stoffe oder Zusammensetzungen, die innerhalb des Kultursubstrates Freiräume für die Wurzelbildung schaffen. Der eine oder die mehreren Torfersatzstoffe können beispielsweise ausgewählt sein aus der Gruppe bestehend aus Kompost (z. B. Grünschnittkompost, Biokompost und/oder kompostierte Gärreste), Rindenhumus, Pinienrinde, Lava, Bims, Blähton, Holzfasern, Holzfaserstoffe, Xylit (Braunkohlefaserholz), Perlit, Vermiculit, Flachsschäben, Reisspelzen, Kokoschips, Kokosmark, Kokosfasern, Pflanzen und/oder Pflanzenbestandteile. Besonders bevorzugt umfasst das Kultursubstrat Kompost, Holzfasern und/oder Kokosmark. Pflanzen bzw. Pflanzenbestandteile können z. B. ausgewählt sein aus der Gruppe bestehend aus Torfmoos, Typha, Schilf und dergleichen und Mischungen derselben bzw. Bestandteilen dieser Pflanzen. Die Pflanzen und/oder Pflanzenbestandteile können zum Beispiel in getrockneter Form vorliegen. Bevorzugt ist Torfmoos, z. B. getrocknetes Torfmoos.

Die oben für Weißtorf angegebenen Mengenangaben gelten in gleicher Weise auch für die Torfersatzstoffe. Das erfindungsgemäße Kultursubstrat kann daher einen oder mehrere Torfersatzstoffe in einer Gesamtmenge (alle Torfersatzstoffe gemeinsam) von 10 Vol.-% oder mehr, 15 Vol.-% oder mehr, 20 Vol.-% oder mehr, 25 Vol.-% oder mehr, 30 Vol.-% oder mehr, 35 Vol.-% oder mehr, 40 Vol.-% oder mehr, 45 Vol.-% oder mehr, oder sogar 50 Vol.-% oder mehr umfassen. Bevorzugt enthält das Kultursubstrat 15 Vol.-% oder mehr, stärker bevorzugt 25 Vol.-% oder mehr Torfersatzstoff oder Torfersatzstoffe. In beispielhaften Ausführungsformen kann das Kultursubstrat von 15 bis 95 Vol.-%, bevorzugt von 25 bis 95 Vol.-%, stärker bevorzugt von 35 bis 95 Vol.-% Torfersatzstoff umfassen.

Erfindungsgemäß geeignete Mengenangaben für Torfe und Torfersatzstoffe sind in der folgenden Tabelle zusammengefasst:

| **Mengen Torf und Torfersatzstoffe** | | | |
|---|---|---|---|
| | **Einheit** | **Beispielmengen** | **bevorzugte Mengen** |
| Weißtorf | Vol.-% | 0-100 | 0-100 |
| Schwarztorf | Vol.-% | 0-100 | 0-80 |
| Kompost | Vol.-% | 0-30 | 3-20 |
| Rindenhumus | Vol.-% | 0-50 | 5-20 |
| Xylit | Vol.-% | 0-50 | 5-30 |
| Kokosmark | Vol.-% | 0-100 | 5-30 |
| Kokosfasern | Vol.-% | 0-40 | 5-20 |
| Kokoschips | Vol.-% | 0-40 | 5-20 |
| Holzfasern | Vol.-% | 0-50 | 5-30 |
| Flachsschäben | Vol.-% | 0-40 | 5-20 |
| Reisspelzen | Vol.-% | 0-40 | 5-20 |
| Perlite | Vol.-% | 0-40 | 5-25 |
| (gebrochener) Blähton | Vol.-% | 0-40 | 5-20 |
| Lava | Vol.-% | 0-40 | 5-20 |
| Bims | Vol.-% | 0-40 | 5-20 |
| Vermiculite | Vol.-% | 0-30 | 5-15 |

Das erfindungsgemäße Kultursubstrat ist eine Substanzmischung, die neben den bereits definierten Flohsamenschalen und/oder Flohsamenschalenfragmenten und Torf und/oder Torfersatzstoffen weitere Substanzen umfassen kann. Dadurch kann das Kultursubstrat an unterschiedliche Anwendungsbereiche und Pflanzen angepasst werden. Auch die Bindigkeit kann durch den Zusatz von weiteren Substanzen noch beeinflusst werden.

Vorteilhafterweise ermöglicht die Erfindung die Herstellung von Presstopfsubstraten mit einem geringeren Schwarztorfanteil bzw. einem höheren Anteil an Weißtorf oder alternativen Substratausgangsstoffen, da die verwendeten Flohsamenschalen bzw. Flohsamenschalenfragmente in der Lage sind, auch derart zusammengesetzte Kultursubstrate hinreichend zu stabilisieren.

Überraschenderweise hat sich herausgestellt, dass die Effektivität des erfindungsgemäßen Kultursubstrates durch Beimengung weiterer Bindemittel, insbesondere Ton oder Kieselgur, noch weiter verbessert werden kann. Insbesondere die Formstabilität und Bindigkeit von z. B. mit dem Kultursubstrat hergestellten Presstöpfen wird durch die Beimengung verbessert. In bevorzugten Ausführungsformen umfasst das Kultursubstrat daher (c) Ton und/oder Kieselgur.

Als "Ton" werden erfindungsgemäß mineralische Erden bezeichnet, d.h. Erden, die hauptsächlich inorganische Bestandteile umfassten. Der Ton weist in der Regel eine kleine Teilchengröße auf. Geeignete Tonmaterialien sind Fachleuten bekannt und kommerziell erhältlich, beispielsweise Feuchtton, Tongranulat und Tonmehl.

"Kieselgur" besteht vorrangig aus den Schalen fossiler Kieselalgen und damit zu einem großen Anteil an Siliciumdioxid. Kieselgur ist in der Regel pulverförmig und ebenfalls Fachleuten bekannt und kommerziell erhältlich.

Das Kultursubstrat kann beispielsweise 2 kg/m³ oder mehr Bindemittel, insbesondere Ton und/oder Kieselgur umfassen, z. B. 5 kg/m³ oder mehr, vorzugsweise 10 kg/m³ oder mehr. Mit anderen Worten, kann das Kultursubstrat beispielsweise von 2 bis 80 kg/m³, vorzugsweise von 5 bis 60 kg/m³ Bindemittel umfassen. Feuchtton kann beispielsweise in einem Bereich von 1 bis 20 Vol.-%, vorzugsweise 3 bis 10 Vol.-% enthalten sein. Tongranulat kann beispielsweise in einem Bereich von 2 bis 80 kg/m³, vorzugsweise 5 bis 60 kg/m³ enthalten sein. Tonmehl kann beispielsweise in einem Bereich von 2 bis 60 kg/m³, vorzugsweise 3 bis 20 kg/m³ enthalten sein. Kieselgur kann beispielsweise in einem Bereich von 2 bis 40 kg/m³, vorzugsweise von 2 bis 20 kg/m³ enthalten sein.

Erfindungsgemäß geeignete Mengenangaben für diese Bindemittel sind in der folgenden Tabelle zusammengefasst:

| **Mengen Bindemittel** | | | |
|---|---|---|---|
| | **Einheit** | **Beispielmengen** | **bevorzugte Mengen** |
| **Feuchtton** | Vol.-% | 0-20 | 3-10 |
| **Tongranulat** | kg/m³ | 0-80 | 5-60 |
| **Tonmehl** | kg/m³ | 0-60 | 3-20 |
| **Kieselgur** | kg/m³ | 0-40 | 2-20 |

Neben den volumenbringenden Ausgangsstoffen (Substratausgangsstoffen) sind noch die sogenannten Zusatzstoffe (Substratzusätze) maßgeblicher Bestandteil von Kultursubstraten. Diese werden in kleinen Mengen zugegeben und sollen die chemischen, physikalischen oder biologischen Eigenschaften des Kultursubstrats optimieren. Mit unterschiedlichen am Markt verfügbaren Kalken kann beispielsweise der pH-Wert des Kultursubstrats eingestellt werden. Über verschiedenste Düngemittel können an Pflanzenbedürfnisse und Kulturverfahren des Gartenbaubetriebs angepasste Nährstoffmengen in das Kultursubstrat eingebracht werden. Unterschieden werden die Düngemittel nach unterschiedlichsten Wirkungsweisen und Nährstoffzusammensetzungen. Optional eingesetzte Netzmittel (z. B. synthetische Tenside oder organische Netzmittel), mit denen die Wasseraufnahme und Wasserverteilung im Kultursubstrat positiv beeinflusst wird, zählen genauso zu den Substratzusätzen, wie biologische Pflanzenschutz- oder Pflanzenstärkungsmittel mit nützlichen Mikroorganismen in Form von Pilzen oder Bakterien, von denen man sich den Schutz oder die Stärkung der Pflanzen oder eine Verbesserung der Nährstoffverfügbarkeit verspricht. Es versteht sich, dass erfindungsgemäße Kultursubstrate diese und weitere handelsübliche Zusatzstoffe enthalten können. Damit sind die Kultursubstrate ideal an die Kultivierung verschiedener Pflanzenarten anpassbar.

In einem verwandten Aspekt betrifft die Erfindung einen Presstopf oder Jungpflanzenplug, dadurch gekennzeichnet, dass er ein erfindungsgemäßes Kultursubstrat umfasst. Bevorzugt besteht der Presstopf oder der Jungpflanzenplug aus dem Kultursubstrat. Es ist aber auch denkbar, dass der Presstopf bzw. der Jungpflanzenplug Schichten oder Einschlüsse aus einem anderen Material umfassen kann. Daher besteht der Presstopf bzw. der Jungpflanzenplug vorzugsweise zu 70% oder mehr, stärker bevorzugt zu 80% oder mehr aus dem Kultursubstrat. Vorzugsweise besteht insbesondere der Bereich, in dem die Jungpflanze ihre Wurzeln bilden soll - der Wurzelraum - des Presstopfes bzw. des Jungpflanzenplugs aus dem Kultursubstrat. Ein "Presstopf" ist ein unter Druck aus einem Kultursubstrat hergestelltes Pflanzgefäß. Ein "Jungpflanzenplug" ist weniger fest als ein Presstopf und kann beispielsweise aus wenig oder gar nicht verdichtetem Kultursubstrat bestehen. Das Pflanzgefäß stellt den Pflanzen einen Verwurzelungsraum (Wurzelraum) zur Verfügung, der aus dem Kultursubstrat besteht. Das Hinzufügen eines Kultursubstrats zum Presstopf bzw. Jungpflanzenplug ist daher nicht erforderlich. Üblicherweise wird der Presstopf durch Zusammenpressen des feuchten Kultursubstrats hergestellt. Dabei kann beispielsweise auch eine Pflanzkule in dem Presstopf vorgesehen sein, in die ein oder mehrere Samen oder Stecklinge eingebracht werden können. Die Pflanzkule verhindert ein Verrutschen oder Herausfallen des Samens oder Stecklings, so dass dieser in das Kultursubstrat einwurzeln kann. Der Jungpflanzenplug kann beispielsweise durch Einstreuen des Kultursubstrats in einen Behälter - beispielsweise eine Anzuchtpalette oder Jungpflanzenpalette - hergestellt werden. Dabei kann das Kultursubstrat optional manuell oder maschinell verdichtet werden.

In einem weiteren Aspekt betrifft die Erfindung ein Verfahren zur Herstellung eines Presstopfes, dadurch gekennzeichnet, dass Kultursubstrat unter Druckeinwirkung in eine Topf- oder Würfelform verpresst wird. Die Topfform kann beispielsweise eine im Wesentlichen zylindrische oder Quaderform aufweisen. Ferner kann in den Presstopf durch lokale zusätzliche Druckeinwirkung, wie oben angedeutet, eine Einbuchtung eingebracht werden, in welcher das Samenkorn platziert wird. Geeignete Herstellungsverfahren für Presstöpfe sind Fachleuten bekannt und können in gleicher Weise auf das erfindungsgemäße Kultursubstrat angewendet werden.

In noch einem weiteren Aspekt betrifft die Erfindung ein Verfahren zur Kultivierung einer Pflanze, dadurch gekennzeichnet, dass das Verfahren Schritte umfasst, bei denen man
a) einen erfindungsgemäßen Presstopf, Jungpflanzenplug oder ein erfindungsgemäßes Kultursubstrat bereitstellt;
b) mindestens einen Samen oder Steckling (Pflanzensteckling) in oder auf den Presstopf, Jungpflanzenplug oder das Kultursubstrat bringt; und
c) den mindestens einen Samen oder Steckling in dem Presstopf, Jungpflanzenplug oder Kultursubstrat unter Bedingungen kultiviert, die das Keimen des Samens oder Wachstums des Stecklings fördern. Entsprechende Kultivierungsbedingungen sind Fachleuten bekannt.

In noch einem Aspekt betrifft die Erfindung ein Kultivierungssystem zur Kultivierung einer Pflanze, dadurch gekennzeichnet, dass es eine oder mehrere Paletten umfasst, in der oder denen jeweils zwei oder mehr erfindungsgemäße Presstöpfe oder Jungpflanzenplugs angeordnet sind. Die Paletten sind Trägerelemente, die ausgebildet sind, um zwei oder mehr Presstöpfe bzw. Jungpflanzenplugs zu tragen. Die Paletten können zu diesem Zweck mindestens eine Bodenplatte aufweisen, auf der die Presstöpfe bzw. Jungpflanzenplugs stehen. Die Paletten können darüber hinaus einen Außenrand aufweisen, der beispielswiese um die Bodenplatte umlaufend ausgebildet sein kann und ein Herunterrutschen der Presstöpfe bzw. Jungpflanzenplugs verhindert. Entsprechende Paletten sind Fachleuten bekannt.

Schließlich betrifft die Erfindung auch Verwendungen von Flohsamenschalen und/oder Flohsamenschalenfragmenten zur Verfestigung eines Kultursubstrates, bei der dem Kultursubstrat Flohsamenschalen und/oder Flohsamenschalenfragmente beigemengt werden, vorzugsweise 2 kg/m³ oder mehr Flohsamenschalen und/oder Flohsamenschalenfragmente.

Weitere Vorteile, Kennzeichen und Merkmale der vorliegenden Erfindung werden bei der nachfolgenden detaillierten Beschreibung von Ausführungsbeispielen deutlich. Allerdings ist die Erfindung nicht auf diese Ausführungsbeispiele beschränkt.

### Kurze Beschreibung der Figur

In der Figur sind Beispiele bzw. Ergebnisse der Erfindung schematisch dargestellt:

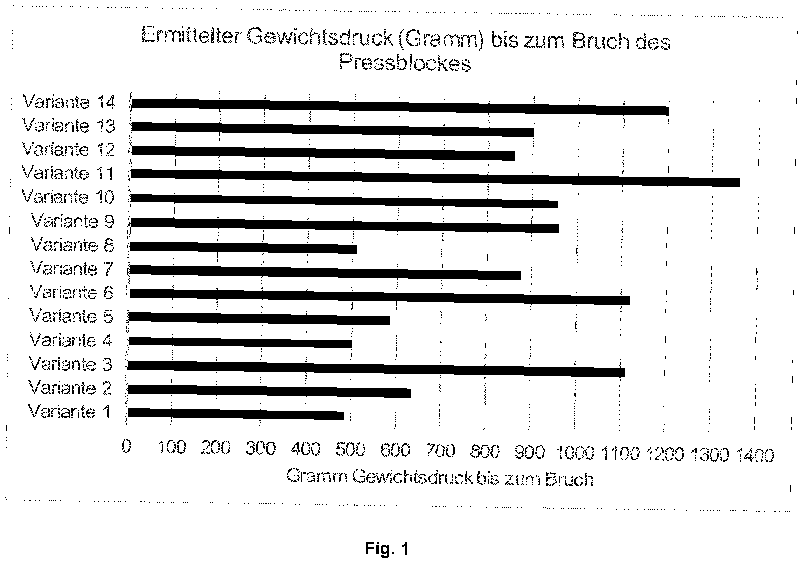

- **Fig. 1**: zeigt Ergebnisse aus dem in Beispiel 1 beschriebenen Belastungstest, wobei die folgenden Varianten getestet wurden: 1: FDUR Seed S 0,8; 2: FDUR Seed S 0,8 + 5 kg Tonmehl; 3: FDUR Seed S 0,8 + 5 kg FSS; 4: 30% Schwarztorf + 20% Weißtorf + 10% Kompost + 20% Holzfasern + 20% Kokosmark; 5: 30% Schwarztorf + 20% Weißtorf + 10% Kompost + 20% Holzfasern + 20% Kokosmark + 5 kg Tonmehl; 6: 30% Schwarztorf + 20% Weißtorf + 10% Kompost + 20% Holzfasern + 20% Kokosmark + 5 kg FSS; 7: PTE WTB 1 ; 8: PTE WTB 2 ; 9: PTE WTB 3 ; 10: Test PTE Kunde PP 60% Schwarztorf + 10% Weißtorf + 15% Kompost + 15% Holzfasern; 11: Test PTE Kunde PP 60% Schwarztorf + 10% Weißtorf + 15% Kompost + 15% Holzfasern + 5 kg FSS; 12: FDUR BLOCK A; 13: FDUR BLOCK A + 5 kg Tonmehl; 14: FDUR BLOCK A + 5 kg FSS.

### Beispiele

### Beispiel 1: Nachweis einer verbesserten Bindefähigkeit von Presstopfsubstraten bei Zusatz von Flohsamenschalen oder Flohsamenschalenfragmenten

Um die Wirkung einer verbesserten Bindefähigkeit bei Einsatz von Flohsamenschalen bzw. Flohsamenschalenfragmenten zu prüfen, wurden eigens dafür entwickelte Fall- und Belastungstests miteinander verbunden. Mittels üblicher Herstellungsverfahren wurden zunächst aus den verschiedenen, unten näher erläuterten Kultursubstraten Presstöpfe hergestellt.

### A. Falltest

Beim Falltest wurde ein aus dem Versuchssubstrat hergestellter Presstopf aus einer Höhe von ca. 1,5 m auf einen befestigten Boden fallen gelassen. Damit wurden in der Praxis häufig auftretende mechanische Belastungen simuliert. Zu ähnlichen Belastungen kommt es beispielsweise häufig beim Auspflanzen im Freiland. Es wurde bei diesem Versuch jeweils die Anzahl der zerbrochenen (z) und der heil gebliebenen (h) Presstöpfe gezählt.

### B. Belastungstest

Für den Belastungstest wurde ein Testaufbau konstruiert, in dem ein gewindegeführter Stempel ohne eigene Drehung langsam den Druck auf einen auf einer tarierten Waage platzierten Presstopf erhöht. Die Einstellung, ab der der Druck - gemessen am Gewicht - auf den Presstopf nicht weiter erhöht werden konnte, weil ein Spalt ausgehend vom Stempel entstand und der Presstopf zerbrach, wurde jeweils notiert. Ein Mittelwert aus mehreren Wiederholungen diente als objektives Maß für die Bindigkeit.

### Kontrolle

Als Kontrollsubstrat wurde die Rezeptur eines handelsüblichen, weltweit vertriebenen Vermehrungssubstrates, Floradur Seed S 0,8 (Floragard), verwendet. Dieses Substrat besteht in seiner Zusammensetzung zu 50 % aus Weißtorf und zu 50 % aus Schwarztorf. Das Substrat wird überwiegend zur Aussaat in Trays verwendet. Zur Herstellung von Presstöpfen ist dieses Substrat aufgrund seines hohen Weißtorfanteils nicht geeignet.

Im weiteren Versuchsablauf wurde dieses Kontrollsubstrat mit unterschiedlichen zu testenden Additiven u.a. auch Flohsamenschalenfragmenten versehen. Darüber hinaus wurden auch Kombinationen von Substratzusätzen getestet z. B. Kombinationen aus feinem Ton und Flohsamenschalen bzw. Flohsamenschalenfragmenten. Auch andere Kombinationen sind möglich.

Um eine bei dieser Versuchsanordnung bestätigte Verbesserung unter noch extremeren Bedingungen testen zu können, wurden zusätzlich noch Substratmischungen geprüft, die deutlich weniger Torf, insbesondere weniger Schwarztorf, als das Substrat Floradur Seed S 0,8 enthielten.

Zusätzlich wurden auch ein bewährtes Presstopfsubstrat, das Floradur Block A (Floragard), als weiteres Kontrollsubstrat mit in die Versuchsanordnung aufgenommen.

### Ergebnisse

Eindrucksvoll zeigte sich im Falltest und im Belastungstest eine deutliche Verbesserung der Bindigkeit von Kultursubstraten, wenn Flohsamenschalenfragmente (FSS; Flohsamenschalen Pulver Reinheit 60 mesh) eingemischt waren. Das verwendete FSS wurde bei einem Fachhandel erworben. Durch die Flohsamenschalenfragmente wurde sowohl in Standardsubstraten als auch Testsubstraten die Bindigkeit verbessert. Die Zugabe von Tonmehl konnte ebenfalls eine Verbesserung der Bindigkeit bewirken.

### Ergebnisse Falltest (z=zerbrochen; h=heil geblieben; FSS=Flohsamenschalen Pulver; WTB=Wettbewerber; PTE=Presstopferde):

Wie in der nachfolgenden Tabelle erkennbar, zeigte sich im Falltest, dass die Zugabe von Flohsamenschalenfragmenten (FSS) in den Testvarianten 3 und 6 dazu führte, dass die Bindingkeit von Kultursubstraten, die allein für die Herstellung von Presstöpfen ungeeignet wären, derart verbessert wurde, dass aus den Gemischen hergestellte Presstöpfe im Falltest nicht mehr zerbrachen, sondern heil blieben (h). Aus den Ursprungssubstraten hergestellte Presstöpfe (Testvarianten 1 und 4) zerbrachen jeweils im Falltest. In diesen Substraten führte die Beigabe von Tonmehl im Falltest zu keinen signifikanten Verbesserungen.

### Ergebnis, n=5

| **Variante** | **Kultursubstrat** | **1** | **2** | **3** | **4** | **5** |
|---|---|---|---|---|---|---|
| **1** | FDUR Seed S 0,8 | z | z | z | z | z |
| **2** | FDUR Seed S 0,8 + 5 kg Tonmehl | z | z | z | z | z |
| **3** | FDUR Seed S 0,8 + 5 kg FSS | h | h | h | h | h |
| **4** | 30% Schwarztorf + 20% Weißtorf + 10% Kompost + 20% Holzfasern + 20% Kokosmark | z | z | z | z | z |
| **5** | 30% Schwarztorf + 20% Weißtorf + 10% Kompost + 20% Holzfasern + 20% Kokosmark + 5 kg Tonmehl | z | z | z | z | z |
| **6** | 30% Schwarztorf + 20% Weißtorf + 10% Kompost + 20% Holzfasern + 20% Kokosmark + 5 kg FSS | h | h | h | h | h |
| **7** | PTE WTB 1 | h | z | h | h | h |
| **8** | PTE WTB 2 | z | z | z | z | z |
| **9** | PTE WTB 3 | z | z | h | h | z |
| **10** | Test PTE Kunde PP 60% Schwarztorf + 10% Weißtorf + 15% Kompost + 15% Holzfasern | h | z | z | z | z |
| **11** | Test PTE Kunde PP 60% Schwarztorf + 10% Weißtorf + 15% Kompost + 15% Holzfasern + 5 kg FSS | h | h | h | h | h |
| **12** | FDUR BLOCK A | h | h | h | h | h |
| **13** | FDUR BLOCK A + 5 kg Tonmehl | h | h | h | h | h |
| **14** | FDUR BLOCK A + 5 kg FSS | h | h | h | h | h |

Es wurden ferner drei Presstopfkultursubstrate von Wettbewerbern und Kunden (Testvarianten 7 bis 10) getestet. Hieraus hergestellte Presstöpfe hielten dem Falltest teilweise stand. Eine nicht unerhebliche Zahl an Presstöpfen zerbrach allerdings im Test. Es zeigte sich, dass die Bindigkeit von Presstöpfen durch die Zugabe von Flohsamenschalenfragmenten (Testvariante 11) gegenüber Testvariante 10 deutlich verbessert werden konnte. Keiner der derart veränderten Presstöpfe zerbrach im Test.

Schließlich wurde ein Test mit einem hauseigenen Presstopfsubstrat (Testvarianten 12 bis 14) durchgeführt, der zeigte, dass sowohl das Originalsubstrat (Testvariante 12) als auch die durch Zugabe von Tonmehl oder Flohsamenschalenfragmenten veränderten Substrate dem Falltest standhielten.

### Ergebnisse Belastungstest (FSS=Flohsamenschalen Pulver; WTB=Wettbewerber; PTE=Presstopferde):

Der Belastungstest zeigte, dass die Zugabe von Flohsamenschalenfragmenten in allen getesteten Substraten dazu führte, dass der Gewichtsdruck bis zum Bruch deutlich zunahm (vgl. Tabelle 1 auf der nachfolgenden Seite und Fig. 1). Die Stabilität der Substrate war somit durch die Flohsamenschalenfragmente deutlich verbessert worden.

**Tabelle 1: Ergebnis aus Belastungstest zur Überprüfung der physischen Haltbarkeit der Presstöpfe**

| **Var.** | **Bezeichnung** | **1 WDH** | **2 WDH** | **3 WDH** | **4 WDH** | **5 WDH** | **6 WDH** | **7 WDH** | **8 WDH** | **9 WDH** | **10 WDH** | **MW Gewichtsdruck (g)** |
|---|---|---|---|---|---|---|---|---|---|---|---|---|
| **1** | FDUR Seed S 0,8 | 400 | 400 | 450 | 450 | 500 | 500 | 550 | 500 | 550 | 550 | 485 |
| **2** | FDUR Seed S 0,8 + 5 kg Tonmehl | 600 | 600 | 600 | 650 | 650 | 650 | 650 | 650 | 650 | 650 | 635 |
| **3** | FDUR Seed S 0,8 + 5 kg FSS | 1000 | 1100 | 1100 | 1100 | 1100 | 1100 | 1100 | 1100 | 1200 | 1200 | 1110 |
| **4** | 30% Schwarztorf + 20% Weißtorf + 10% Kompost + 20% Holzfasern + 20% Kokosmark | 500 | 500 | 450 | 550 | 500 | 500 | 450 | 600 | 500 | 450 | 500 |
| **5** | 30% Schwarztorf + 20% Weißtorf + 10% Kompost + 20% Holzfasern + 20% Kokosmark + 5 kg Tonmehl | 650 | 550 | 600 | 650 | 600 | 600 | 650 | 450 | 550 | 550 | 585 |
| **6** | 30% Schwarztorf + 20% Weißtorf + 10% Kompost + 20% Holzfasern + 20% Kokosmark + 5 kg FSS | 1200 | 1100 | 1000 | 1100 | 1100 | 1200 | 1100 | 1200 | 1100 | 1100 | 1120 |
| **7** | PTE WTB 1 | 850 | 750 | 850 | 900 | 900 | 950 | 950 | 950 | 850 | 800 | 875 |
| **8** | PTE WTB 2 | 450 | 500 | 450 | 450 | 500 | 500 | 550 | 550 | 550 | 600 | 510 |
| **9** | PTE WTB 3 | 1100 | 1000 | 1100 | 1100 | 1100 | 1000 | 1000 | 1100 | 1100 | 1000 | 960 |
| **10** | Test PTE Kunde PP 60% Schwarztorf + 10% Weißtorf + 15% Kompost + 15% Holzfasern | 900 | 1000 | 1000 | 900 | 1100 | 900 | 900 | 900 | 950 | 1000 | 955 |
| **11** | Test PTE Kunde PP 60% Schwarztorf + 10% Weißtorf + 15% Kompost + 15% Holzfasern + 5 kg FSS | 1350 | 1300 | 1300 | 1350 | 1300 | 1300 | 1450 | 1450 | 1500 | 1300 | 1360 |
| **12** | FDUR Block A | 800 | 850 | 900 | 800 | 850 | 850 | 900 | 900 | 850 | 900 | 860 |
| **13** | FDUR BLOCK A + 5 kg Tonmehl | 950 | 800 | 900 | 1000 | 900 | 1000 | 950 | 850 | 800 | 850 | 900 |
| **14** | FDUR BLOCK A + 5 kg FSS | 1100 | 1300 | 1300 | 1100 | 1250 | 1200 | 1250 | 1100 | 1200 | 1200 | 1200 |

| | | | | | | | | | | | | |
|---|---|---|---|---|---|---|---|---|---|---|---|---|
| FSS = Flohsamenschalen bzw. Flohsamenschalenfragmente WTB = Wettbewerber PTE = Presstopferde WDH = Wiederholung MW = Mittelwert | | | | | | | | | | | | |

Die Zugabe von Tonmehl führte jeweils ebenfalls zu einer Erhöhung des möglichen Gewichtsdrucks, allerdings war diese Verbesserung weniger deutlich als bei den Flohsamenschalenfragmenten.

Insgesamt zeigte sich, dass durch die Zugabe von Flohsamenschalenfragmenten sogar für die Presstopfherstellung ungeeignete Substrate, wie die Kontrolle (FDUR Seed S 0,8), derart verbessert werden konnten, dass sie für den Einsatz in Presstöpfen geeignet wären. Die derart hergestellten Presstöpfe wiesen letztendlich sogar eine bessere Haltbarkeit auf, als die Praxis des Erwerbsgartenbaus es derzeit von bewährten Presstöpfen (Kontrolle FDUR A Block) gewohnt ist. Dies wurde nach einem Praxistest in einem Gemüsebaubetrieb (Daten nicht gezeigt) von den dortigen Versuchsleitern bestätigt.

### Beispiel 2: Kultivierung in erfindungsgemäßen Presstöpfen

Es wurde in die oben beschriebenen, erfindungsgemäß Flohsamenschalenfragmente enthaltenen Presstöpfe (Testvarianten 3, 6, 11 und 14) testweise Chinakohl eingesät. Es zeigte sich, dass die aus diesen Kultursubstraten hergestellten Presstöpfe eine ebenso gute Haltbarkeit, Mischbarkeit, Maschinengängigkeit aufwiesen, wie die aus dem üblichen Kultursubstrat der Testvariante 12 hergestellten Presstöpfe. Auch in Bezug auf die Auflaufentwicklung der Kulturpflanzen nach der Aussaat und die Wurzelentwicklung waren diese Presstöpfe den handelsüblichen Presstöpfen ebenbürtig. In einem Praxistest in einem Erwerbsgartenbaubetrieb konnte gezeigt werden, dass es keinerlei Unterschiede im Keimverhalten der Pflanzen gab. Die Zugabe der Flohsamenschalen zur Verbesserung der Bindigkeit des Kultursubstrates zur Herstellung von Presstopferden hatte demnach keinen Einfluss auf das Wachstum der Pflanze. Auch die Maschinen, die zur Herstellung der Presstöpfe verwendet wurden, zeigten keine negativen Auffälligkeiten. Die anfängliche Befürchtung, dass es zu einer stärkeren Verschmutzung der Maschinen kommen könnte, konnte so ausgeräumt werden. Es zeigte sich stattdessen, dass die erhöhte Bindigkeit des Substrates ein Klebenbleiben von Substratbestandteilen an der Maschine verhinderte. Reinigungsarbeiten fielen in geringerem Maße an.

Dagegen waren Presstöpfe, die mit dem flohsamenfreien Kultursubstrat der Testvariante 4 hergestellt wurden und einen hohen Weißtorfanteil aufwiesen, sehr krümelig und konnten infolgedessen nicht in eine zufriedenstellend haltbare Form gepresst werden. Wie im Beispiel 1 gezeigt, waren weder der Falltest noch der Belastungstest für diese Variante zufriedenstellend. Oft fielen die Presstöpfe bereits auseinander, wenn diese mit der Hand aufgenommen wurden.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen der vorgestellten Einzelmerkmale verwirklicht werden können, sofern der Schutzbereich der beigefügten Ansprüche nicht verlassen wird. Die vorliegende Offenbarung schließt sämtliche Kombinationen der vorgestellten Einzelmerkmale ein.

## Patentansprüche

1. Kultursubstrat für Pflanzen, umfassend Torf und/oder Torfersatzstoff, **dadurch gekennzeichnet, dass**
das Kultursubstrat Flohsamenschalen und/oder Flohsamenschalenfragmente umfasst.

2. Kultursubstrat nach Anspruch 1, **dadurch gekennzeichnet, dass** das Kultursubstrat Flohsamenschalenfragmente in Pulverform umfasst.

3. Kultursubstrat nach einem der Ansprüche 1 oder 2, **dadurch gekennzeichnet, dass** das Kultursubstrat Torf umfasst und der Torf
a) Weißtorf,
b) Schwarztorf, oder
c) eine Mischung aus Weißtorf und Schwarztorf ist.

4. Kultursubstrat nach einem der vorangegangenen Ansprüche, **dadurch gekennzeichnet, dass** das Kultursubstrat einen oder mehrere Torfersatzstoffe umfasst, der oder die ausgewählt sind aus der Gruppe bestehend aus Kompost, Rindenhumus, Pinienrinde, Lava, Bims, Blähton, Holzfasern, Holzfaserstoffe, Xylit (Braunkohlefaserholz), Perlit, Vermiculit, Flachsschäben, Reisspelzen, Kokoschips, Kokosmark, Kokosfasern und Pflanzen und/oder Pflanzenbestandteilen (z. B. Torfmoos, Typha, Schilf und/oder Bestandteilen davon).

5. Kultursubstrat nach einem der vorangegangenen Ansprüche, **dadurch gekennzeichnet, dass** es einen oder mehrere Substratzusätze umfasst, die ausgewählt sind aus der Gruppe bestehend aus Kalk, Dünger, Pufferstoffen, Netzmitteln (z. B. synthetische Tenside oder organische Netzmittel), Hydrogelen, biologischen oder chemischen Pflanzenschutzmitteln, Pflanzenstärkungsmitteln, Bodenhilfsstoffen (z. B. Huminstoffe), Färbemitteln und Bindemitteln.

6. Kultursubstrat nach einem der vorangegangenen Ansprüche, **dadurch**
**gekennzeichnet, dass** es Ton und/oder Kieselgur umfasst

7. Kultursubstrat nach einem der vorangegangenen Ansprüche, **dadurch gekennzeichnet, dass** es 2 kg/m³ oder mehr Flohsamenschalen und/oder Flohsamenschalenfragmente umfasst, vorzugsweise von 2 bis 10 kg/m³.

8. Kultursubstrat nach einem der vorangegangenen Ansprüche, **dadurch gekennzeichnet, dass** es 30 Vol.-% oder mehr Weißtorf umfasst.

9. Kultursubstrat nach einem der vorangegangenen Ansprüche, **dadurch gekennzeichnet, dass** es mindestens 5 kg/m³Ton umfasst.

10. Presstopf oder Jungpflanzenplug, **dadurch gekennzeichnet, dass** er ein Kultursubstrat nach einem der vorangegangenen Ansprüche umfasst.

11. Presstopf oder Jungpflanzenplug nach Anspruch 10, **dadurch gekennzeichnet, dass** er aus dem Kultursubstrat besteht.

12. Verfahren zur Herstellung eines Presstopfes, **dadurch gekennzeichnet, dass** Kultursubstrat nach einem der Ansprüche 1 bis 9 unter Druckeinwirkung in eine Form verpresst wird, wobei die Form vorzugsweise eine Quaderform oder zylindrisch ist.

13. Verfahren zur Kultivierung einer Pflanze, **dadurch gekennzeichnet, dass** das Verfahren die Schritte umfasst:
a) Bereitstellen eines Presstopfes oder Jungpflanzenplugs nach einem der Ansprüche 10 und 11 oder eines Kultursubstrats nach einem der Ansprüche 1 bis 9;
b) Einbringen mindestens eines Samens oder Stecklings in oder auf den Presstopf, den Jungpflanzenplug oder das Kultursubstrat; und
c) Kultivierung des mindestens einen Samens oder Stecklings in dem Presstopf, Jungpflanzenplug oder Kultursubstrat unter Bedingungen, die das Keimen des Samens oder Wachstums des Stecklings fördern.

14. Kultivierungssystem zur Kultivierung einer Pflanze, **dadurch gekennzeichnet, dass** es eine oder mehrere Paletten umfasst, in der oder denen jeweils zwei oder mehr Presstöpfe oder Jungpflanzenplugs nach einem der Ansprüche 10 und 11 angeordnet sind.

15. Verwendung von Flohsamenschalen und/oder Flohsamenschalenfragmenten zur Verfestigung eines Kultursubstrates, bei der dem Kultursubstrat Flohsamenschalen und/oder Flohsamenschalenfragmente beigemengt werden, vorzugsweise 2 kg/m³ oder mehr.

## Claims

1. Growing substrate for plants, comprising peat and/or peat substitute, **characterized in that** the growing substrate comprises psyllium seed husks and/or psyllium seed husk fragments.

2. Growing substrate according to Claim 1, **characterized in that** the growing substrate comprises psyllium seed husk fragments in powder form.

3. Growing substrate according to either of Claims 1 and 2, **characterized in that** the growing substrate comprises peat and the peat is
a) white peat,
b) black peat, or
c) a mixture of white peat and black peat.

4. Growing substrate according to any of the preceding claims, **characterized in that** the growing substrate comprises one or more peat substitutes selected from the group consisting of compost, composted bark, pine bark, lava, pumice, expanded clay, wood fibres, xylit, perlite, vermiculite, flax shives, rice husks, coco chips, coir pith, coir and plants and/or plant constituents (e.g. peat moss, Typha, reed and/or constituents thereof).

5. Growing substrate according to any of the preceding claims, **characterized in that** it comprises one or more substrate additives selected from the group consisting of lime, fertilizers, buffer substances, wetting agents (e.g. synthetic surfactants or organic wetting agents), hydrogels, biological or chemical plant protection products, plant strengthening agents, soil additives (e.g. humic substances), colourants and binders.

6. Growing substrate according to any of the preceding claims, **characterized in that** it comprises clay and/or kieselguhr.

7. Growing substrate according to any of the preceding claims, **characterized in that** it comprises 2 kg/m³ or greater of psyllium seed husks and/or psyllium seed husk fragments, preferably from 2 to 10 kg/m³.

8. Growing substrate according to any of the preceding claims, **characterized in that** it comprises 30% by volume or greater of white peat.

9. Growing substrate according to any of the preceding claims, **characterized in that** it comprises at least 5 kg/m³ of clay.

10. Soil block or soil plug, **characterized in that** it comprises a growing substrate according to any of the preceding claims.

11. Soil block or soil plug according to Claim 10, **characterized in that** it consists of the growing **substrate.**

12. Method for producing a soil block, **characterized in that** growing substrate according to any of Claims 1 to 9 is pressed into a shape under the action of pressure, wherein the shape is preferably a cuboid shape or cylindrical.

13. Method for cultivating a plant, **characterized in that** the method comprises the steps of:
a) providing a soil block or soil plug according to either of Claims 10 and 11 or a growing substrate according to any of Claims 1 to 9;
b) introducing at least one seed or cutting into or onto the soil block, the soil plug or the growing substrate; and
c) cultivating the at least one seed or cutting in the soil block, soil plug or growing substrate under conditions which promote the germination of the seed or growth of the cutting.

14. Cultivation system for cultivating a plant, **characterized in that** it comprises one or more pallets, in each of which there are arranged two or more soil blocks or soil plugs according to either of Claims 10 and 11.

15. Use of psyllium seed husks and/or psyllium seed husk fragments for strengthening a growing substrate, in which psyllium seed husks and/or psyllium seed husk fragments, preferably 2 kg/m³ or greater, are mixed with the growing substrate.

## Revendications

1. Substrat de culture pour plantes, comprenant de la tourbe et/ou un succédané de tourbe, **caractérisé en ce que** le substrat de culture comprend des cosses de graines de psyllium et/ou des fragments de cosses de graines de psyllium.

2. Substrat de culture selon la revendication 1, **caractérisé en ce que** le substrat de culture comprend des fragments de cosses de graines de psyllium sous forme de poudre.

3. Substrat de culture selon l'une des revendications 1 ou 2, **caractérisé en ce que** le substrat de culture comprend de la tourbe, et la tourbe est
a) de la tourbe blanche,
b) de la tourbe noire, ou
c) un mélange de tourbe blanche et de tourbe noire.

4. Substrat de culture selon l'une des revendications précédentes, **caractérisé en ce que** le substrat de culture comprend un ou plusieurs succédanés de tourbe, qui sont choisis dans le groupe consistant en compost, humus d'écorces, écorce de pin, lave, pierre ponce, argile expansée, fibres de bois, matières fibreuses à base de bois, xylite (fibres de bois de lignite), perlite, vermiculite, paille de lin, glumes de riz, fragments de coques de noix de coco, tourbe de coco, fibres de copra et plantes et/ou constituants de plantes (par exemple, mousse de tourbe, massette, roseau commun et/ou leurs constituants).

5. Substrat de culture selon l'une des revendications précédentes, **caractérisé en ce qu'**il comprend un ou plusieurs additifs pour substrat, qui sont choisis dans le groupe consistant en chaux, engrais, substances tampons, mouillants (par exemple tensioactifs synthétiques ou mouillants organiques), hydrogels, agents phytosanitaires biologiques ou chimiques, agents de renforcement des plantes, additifs pour le sol (par exemple substances humiques), colorants et liants.

6. Substrat de culture selon l'une des revendications précédentes, **caractérisé en ce qu'**il comprend de l'argile et/ou du kieselguhr.

7. Substrat de culture selon l'une des revendications précédentes, **caractérisé en ce qu'**il comprend 2 kg/m³ ou plus de cosses de graines de psyllium et/ou de fragments de cosses de graines de psyllium, de préférence de 2 à 10 kg/m³.

8. Substrat de culture selon l'une des revendications précédentes, **caractérisé en ce qu'**il comprend 30 % en volume ou plus de tourbe blanche.

9. Substrat de culture selon l'une des revendications précédentes, **caractérisé en ce qu'**il comprend au moins 5 kg/m³ d'argile.

10. Terreau motte ou plateau de semis, **caractérisé en ce qu'**il comprend un substrat de culture selon l'une des revendications précédentes.

11. Terreau motte ou plateau de semis selon la revendication 10, **caractérisé en ce qu'**il est constitué du substrat de culture.

12. Procédé de fabrication d'un terreau motte, **caractérisé en ce qu'**on comprime dans un moule un substrat de culture selon l'une des revendications 1 à 9 sous l'action d'une pression, le moule ayant de préférence une forme parallélépipédique ou cylindrique.

13. Procédé de culture d'une plante, **caractérisé en ce que** le procédé comprend les étapes suivantes :
a) fourniture d'un terreau motte ou d'un plateau de semis selon l'une des revendications 10 et 11 ou d'un substrat de culture selon l'une des revendications 1 à 9 ;
b) introduction d'au moins une graine ou d'une bouture dans ou sur le terreau motte, le plateau de semis ou le substrat de culture ; et
c) culture de l'au moins une graine ou bouture dans un terreau motte, un plateau de semis ou un substrat de culture dans des conditions favorisant la germination de la graine ou la croissance de la bouture.

14. Système de culture destiné à la culture d'une plante, **caractérisé en ce qu'**il comprend une ou plusieurs palettes, dans laquelle ou dans chacune desquelles sont disposés au moins deux terreaux mottes ou plateaux de semis selon l'une des revendications 10 et 11.

15. Utilisation de cosses de graines de psyllium et/ou de fragments de cosses de graines de psyllium pour consolider un substrat de culture, dans lequel on mélange au substrat de culture des cosses de graines de psyllium et/ou des fragments de cosses de graines de psyllium, de préférence 2 kg/m³ ou plus.
